# EUROPEAN PATENT APPLICATION

(11) **EP 4 620 805 A1**
(43) Date of publication of application: **24.09.2025**
(21) Application number: 22970045.5
(22) Date of filing: 27.12.2022
(51) Int. Cl.: B64C 13/18, B64D 47/08, B64U 10/10

(54) **DISPLAY SYSTEM AND DISPLAY METHOD FOR WORK VEHICLE AND UNMANNED AERIAL VEHICLE**

(71) Applicant: Kubota Corporation, Osaka 556-8601 (JP)
(72) Inventor: SAKAGUCHI, Kazuo, Sakai-shi, Osaka 590-0908 (JP)
(74) Representative: Cabinet Beau de Loménie
(86) International application number: PCT/JP2022/048194
(87) International publication number: WO 2024/142251

(57) **Abstract**

A display system displays, on a display, positions of a work vehicle and one or more unmanned aerial vehicles flying around the work vehicle. The display system includes a processing device configured to obtain position information of the work vehicle and the unmanned aerial vehicles, and based on the position information, display the positions of the work vehicle and the unmanned aerial vehicles in a field shown on the display.

## Description

### TECHNICAL FIELD

The present disclosure relates to display systems and display methods for work vehicles and unmanned aerial vehicles.

### BACKGROUND ART

An unmanned aerial vehicle (UAV) is an aircraft that structurally cannot accommodate human occupants and is capable of flight through remote control or autonomous operation. A rotary-wing type unmanned aerial vehicle is a UAV that generates lift using propellers, namely rotary wings, which rotate around an axis. A small unmanned aerial vehicle equipped with multiple rotary wings (Multi-Rotor UAV) is also called a "drone", "multirotor", or "multicopter", and is widely used for applications including aerial photography, surveying, logistics, and agricultural spraying.

Patent Document No. 1 describes an unmanned aerial vehicle (unmanned flying body) that changes its flight position in coordination with the operation of an agricultural machine.

### CITATION LIST

### PATENT LITERATURE

Patent Document No. 1: Japanese Patent Application Publication No. 2022-104737

### SUMMARY OF INVENTION

### TECHNICAL PROBLEM

The present disclosure provides a display system and display method that realizes effective information display in a system including a work vehicle performing ground operations such as agricultural work or construction work, and an unmanned aerial vehicle.

### SOLUTION TO PROBLEM

The display system of the present disclosure, in an exemplary and nonlimiting embodiment, is a system that displays on a display the positions of a work vehicle and one or more unmanned aerial vehicles flying around the work vehicle. The display system includes a processing device that obtains position information of the work vehicle and the unmanned aerial vehicles, and based on the position information, displays the positions of the work vehicle and the unmanned aerial vehicles in a field shown on the display.

### ADVANTAGEOUS EFFECTS OF INVENTION

According to embodiments of the present disclosure, the positions of a work vehicle and one or more unmanned aerial vehicles around the work vehicle can be displayed in a field shown on a display. This enables users to quickly grasp the positional relationship between the work vehicle and unmanned aerial vehicles.

### BRIEF DESCRIPTION OF DRAWINGS

FIG. **1A** is a block diagram schematically showing several examples of rotation drive devices for rotating rotors in an unmanned aerial vehicle equipped with a plurality of rotors.
FIG. **1B** is a plan view schematically showing one example of a basic configuration of an unmanned aerial vehicle equipped with a plurality of rotors.
FIG. **1C** is a side view schematically showing one example of a basic configuration of an unmanned aerial vehicle equipped with a plurality of rotors.
FIG. **1D** is a plan view schematically showing another example of a basic configuration of an unmanned aerial vehicle equipped with a plurality of rotors.
FIG. **2A** is a block diagram showing a basic configuration example of a battery-driven multicopter.
FIG. **2B** is a block diagram showing a basic configuration example of a series hybrid drive type multicopter.
FIG. **2C** is a block diagram showing a basic configuration example of a parallel hybrid drive type multicopter.
FIG. **3** is a diagram showing an example of a system including a multicopter and an agricultural work vehicle.
FIG. **4** is a block diagram showing an example configuration of the system shown in FIG. **3****.**
FIG. **5** is a flowchart showing an example of a communication method executed by a control device of a work vehicle or multicopter.
FIG. **6** is a first diagram explaining an example of a communication method in a system where a work vehicle and multicopter operate in coordination.
FIG. **7** is a second diagram explaining an example of a communication method in a system where a work vehicle and multicopter operate in coordination.
FIG. **8** is a flowchart showing an example where the communication mode changes in three stages according to the distance between a work vehicle and a multicopter.
FIG. **9** is a block diagram showing an example of the hardware configuration of the control device of a work vehicle.
FIG. **10** is a flowchart showing an example of a display method executed by the processor (processing device) in the control device of a work vehicle.
FIG. **11** is a diagram showing an example of a map image displayed on a display.

### DESCRIPTION OF EMBODIMENTS

An unmanned aerial vehicle equipped with a plurality of rotors includes a rotation drive device that rotates the rotors (hereinafter referred to as "propellers"). Hereinafter, such an unmanned aerial vehicle is referred to as a "multicopter".

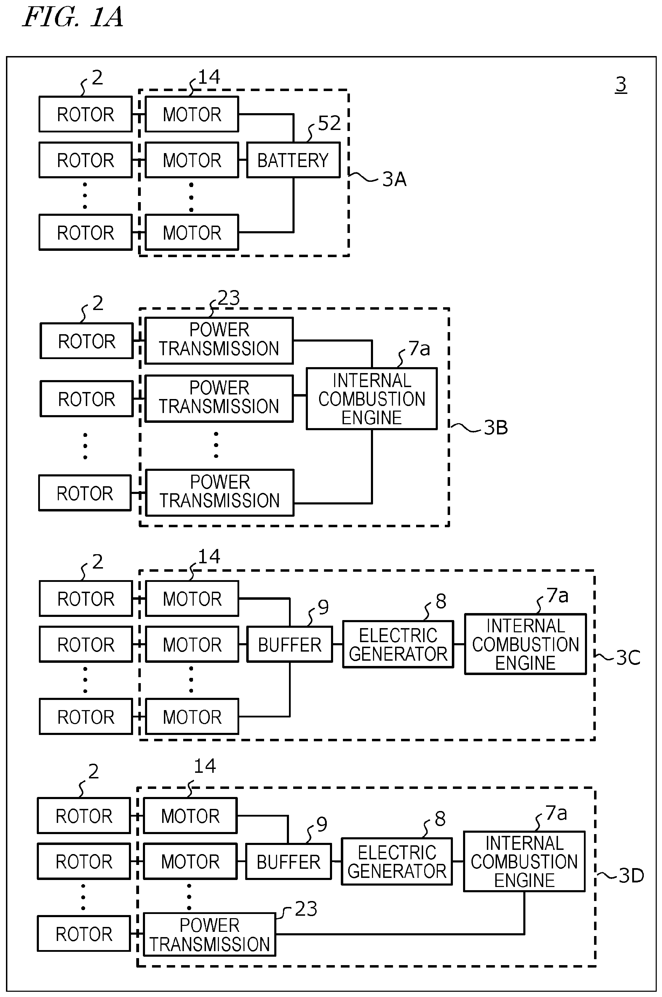

The configuration of rotation drive devices equipped in multicopters exists in various forms. FIG. **1A** is a schematic block diagram showing four examples of rotation drive device **3** in the present disclosure.

The first rotation drive device **3A** shown in FIG. **1A** includes a plurality of electric motors (hereinafter referred to as "motors") **14** that rotate a plurality of rotors **2,** and a battery **52** that stores electric power to be supplied to each motor **14.** The battery **52** is, for example, a secondary battery such as a polymer-type lithium-ion battery. Each rotor **2** is connected to the output shaft of its corresponding motor **14** and is rotated by the motor **14.** To increase payload and/or flight duration, it is necessary to increase the power storage capacity of battery **52.** While the power storage capacity of battery **52** can be increased by making battery **52** larger, enlarging battery **52** leads to an increase in weight.

The second rotation drive device **3B** shown in FIG. **1A** includes a power transmission system **23** mechanically connected to rotor **2,** and an internal combustion engine **7a** that provides driving force (torque) to power transmission system **23.** The power transmission system **23** includes mechanical components such as gears or belts and transmits torque from the output shaft of internal combustion engine **7a** to rotor **2.** The internal combustion engine **7a** can efficiently generate mechanical energy through fuel combustion. Examples of internal combustion engine **7a** may include gasoline engines, diesel engines, and hydrogen engines. Additionally, the number of internal combustion engines **7a** included in rotation drive device **3B** is not limited to one.

The third rotation drive device **3C** shown in FIG. **1A** includes a plurality of motors **14,** a power buffer **9** that stores electric power to be supplied to each motor **14,** an electric generator **8** such as an alternator that generates electric power, and an internal combustion engine **7a** that provides mechanical energy for power generation to the electric generator **8.** While a typical example of power buffer **9** is a battery such as a secondary battery, it may also be a capacitor. In the third rotation drive device **3C,** even when the power buffer **9** does not have a large power storage capacity, it is possible to increase payload and/or flight duration because the electric generator **8** generates electric power using the driving force (mechanical energy) of internal combustion engine **7a.** This type of drive is called "series hybrid drive". The electric generator **8** and internal combustion engine **7a** in series hybrid drive are called a "range extender" as they extend the flight distance of the multicopter.

The fourth rotation drive device **3D** shown in FIG. **1A** includes a plurality of motors **14,** a power buffer **9** that stores electric power to be supplied to each motor **14,** an electric generator **8** such as an alternator that generates electric power, an internal combustion engine **7a** that provides driving force to the electric generator **8** for power generation, a power transmission system **23** that transmits driving force generated by the internal combustion engine **7a** to the rotor **2** to rotate the rotor **2.** At least one rotor **2** of the plurality of rotors **2** is rotated by the internal combustion engine **7a,** while other rotors **2** are rotated by the motor **14.** In the fourth rotation drive device **3D,** since mechanical energy generated by internal combustion engine **7a** can be utilized for rotor rotation without conversion to electrical energy, energy utilization efficiency can be enhanced. This type of drive is called "parallel hybrid drive".

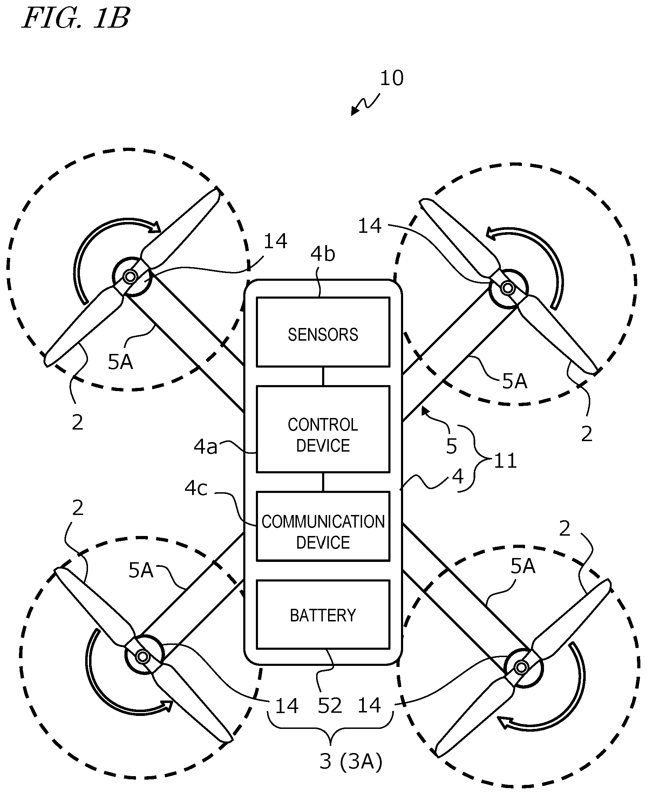

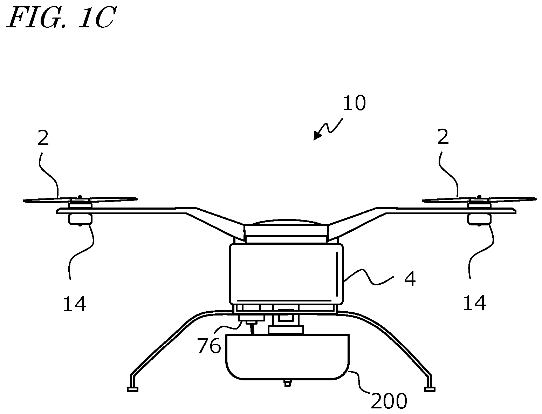

FIG. **1B** is a plan view schematically showing a basic configuration example of multicopter **10.** In the configuration example of FIG. **1B****,** a rotation drive device **3** is equipped with the first rotation drive device **3A** shown in FIG. **1A****.** That is, in this example, rotation drive device **3 (3A)** includes motors **14** and a battery 52. FIG. **1C** is a side view schematically showing the multicopter **10.**

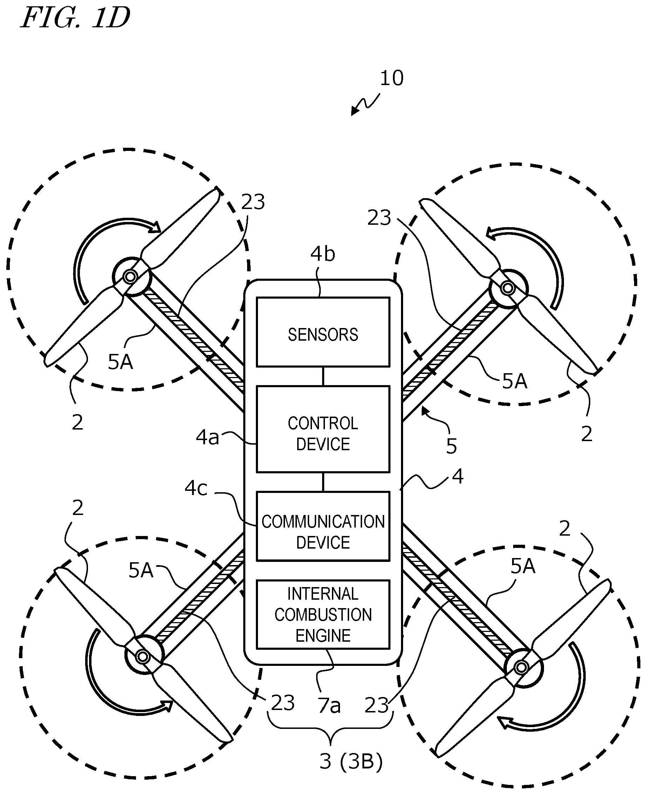

A multicopter **10** shown in FIGS. **1****B** and **1C** includes a plurality of rotors **2,** a main body **4,** and a body frame **5** that supports rotors **2** and main body **4.** The body frame **5** supports the main body **4** at its central portion and supports the plurality of rotors **2** rotatably at the plurality of arms **5A** extending outward from the central portion. The motors **14** that rotate rotors **2** are provided near the ends of each arm **5A.** The main body **4** and body frame **5** may be collectively referred to as "body **11".**

In the example of FIG. **1B****,** the multicopter **10** is a quad-type multicopter (quadcopter) equipped with four rotors **2.** The rotors **2** positioned on the same diagonal line rotate in the same direction (clockwise or counterclockwise), while rotors **2** positioned on different diagonal lines rotate in opposite directions.

The main body **4** includes a control device **4a** configured to control the operation of devices and components mounted on multicopter **10,** sensors **4b** connected to the control device **4a,** a communication device **4c** connected to the control device **4a,** and a battery **52.**

The control device **4a** may include, for example, a flight control device such as a flight controller and a higher-level computer (companion computer). The companion computer may perform advanced computational processing such as image processing, obstacle detection, and obstacle avoidance based on sensor data acquired by the sensors **4b.**

The sensors **4b** may include an acceleration sensor, angular velocity sensor, geomagnetic sensor, atmospheric pressure sensor, altitude sensor, temperature sensor, flow sensor, imaging device, laser sensor, ultrasonic sensor, obstacle contact sensor, and GNSS (Global Navigation Satellite System) receiver. The acceleration sensor and angular velocity sensor may be mounted on the main body **4** as components of an IMU (Inertial Measurement Unit). Examples of laser sensors may include a laser range finder used for measuring distance to the ground, and **2D** or **3D** LiDAR (light detection and ranging).

The communication device **4c** may include a wireless communication module for signal transmission and reception with a ground-based transmitter or ground control station (GCS) via an antenna, and a mobile communication module that utilizes cellular communication networks. The communication device **4c** is configured to receive signals such as control commands transmitted from the ground and transmit sensor data such as image data acquired by sensors **4b** as telemetry information. The communication device **4c** may also include functions for communication between multicopters and satellite communication capabilities. The control device **4a** may connect to computers in the cloud through the communication device **4c.** The computer in the cloud may execute part or all of the functions of the companion computer.

A battery **52** is a secondary battery that is configured to store electric power through charging and supply electric power to motors **14** through discharging. Through the operation of battery **52** and the plurality of motors **14,** a plurality of rotors **2** can be rotationally driven to generate desired thrust.

Each of the plurality of rotors **2** generally includes a plurality of blades with fixed pitch angles and generates thrust through rotation. The pitch angles may be variable. Not all of the plurality of rotors **2** need to have the same diameter (propeller diameter), and one or more rotors **2** may have a larger diameter than other rotors **2.** The thrust (static thrust) generated by rotating the rotor **2** is generally proportional to the cube of the rotor's diameter. Therefore, when the rotors **2** of different diameters are equipped, the rotors **2** with relatively large diameters may be called "main rotors" and the rotors **2** with relatively small diameters may be called "sub-rotors". Regardless of the size of the diameter, the rotors **2** capable of generating relatively large thrust and the rotors **2** capable of generating relatively small thrust may be included depending on the configuration of rotation drive device **3.** In such case, the rotors **2** capable of generating relatively large thrust may be called "main rotors" and the rotors **2** capable of generating relatively small thrust may be called "sub-rotors". For example, the rotors **2** that generate relatively large thrust per rotation may be called "main rotors" and the rotors **2** that generate relatively small thrust per rotation may be called "sub-rotors". In one example, main rotors may be positioned further inward than sub-rotors. In other words, the rotors **2** may be positioned such that the distance from the center of the body to the rotation axis of each main rotor is shorter than the distance from the center to the rotation axis of each sub-rotor.

In this example, the rotation drive device **3** has a plurality of motors **14.** As mentioned above, the rotation drive device **3** may include the internal combustion engine **7a.**

FIG. **1D** is a plan view schematically showing a basic configuration example of a multicopter **10** equipped with the second rotation drive device **3B.** In the example shown in FIG. **1D**, the internal combustion engine **7a** is supported by the main body **4.** In this example, the driving force generated by internal combustion engine **7a** is transmitted to the plurality of rotors **2** through a plurality of power transmission systems **23** to rotate each rotor **2.** The control device **4a** may change the rotational speed of individual rotors **2** by controlling each power transmission system **23.** Rotation drive device **3B** may include a mechanism for changing the pitch angle of blades of each of the plurality of rotors **2.** In that case, the control device **4a** may adjust the lift generated by each rotor **2** by controlling that mechanism to change the blade pitch angles.

In a "parallel hybrid drive" where some of the plurality of rotors **2** are rotated by the internal combustion engine **7a** and other rotors **2** are rotated by the motors **14,** the internal combustion engine **7a** and battery **52** are supported by the main body **4.** At least one of the plurality of rotors **2** is connected to the internal combustion engine **7a** through the power transmission system **23,** and other rotors **2** are connected to the motors **14.**

In such a parallel hybrid drive, the diameter of one or more rotors **2** rotated by the internal combustion engine **7a** may be larger than the diameter of other rotors **2** rotated by the motors **14.** In other words, the internal combustion engine **7a** may be used for rotating the main rotors and the motors **14** may be used for rotating the sub-rotors. In such case, the main rotors are mainly used for generating thrust, and the sub-rotors are used for both generating thrust and attitude control. The main rotors may be called "booster rotors" and the sub-rotors may be called "attitude control rotors".

In the parallel hybrid drive, the internal combustion engine is used for both thrust generation and power generation. By selectively transmitting driving force (torque) generated by the internal combustion engine to either or both of the rotor and electric generator, it is possible to achieve balanced thrust generation and power generation.

When a multicopter is equipped with an internal combustion engine and uses the internal combustion engine for at least one of thrust generation and power generation, this contributes to increased payload and flight duration. It is desirable to perform attitude control of the multicopter by rotating propellers using motors, which have superior response characteristics compared to internal combustion engines. Therefore, in applications where accurate attitude control of the multicopter is required, it is desirable to adopt parallel hybrid drive or series hybrid drive to increase payload and flight duration. Note that when the rotation drive device **3** includes a mechanism for changing the pitch angle of blades of each of the plurality of the rotors **2,** the attitude can also be adjusted by changing the pitch angle of each blade.

Through increased payload and flight duration, the applications of multicopters can be further expanded. For example, in the agricultural field, multicopters are currently being used for agricultural chemical spraying or crop growth monitoring. Various agricultural work can be performed from the air by connecting various ground work machines (hereinafter may be simply referred to as "work machines") to the multicopter. Agricultural work machines are sometimes referred to as "implements". Examples of implements may include sprayers for spraying chemicals on crops, mowers, seeders, spreaders (fertilizer applicators), rakes, balers, harvesters, plows, harrows, or rotary tillers. Work vehicles such as tractors are not included in "implements" in this disclosure.

In the example shown in FIG. **1C****,** an implement **200** capable of dispersing substances such as agricultural chemicals or fertilizers onto a field or crops in the field is connected to multicopter **10.** Increased payload and flight duration enable the implement **200** to achieve a larger size and/or multi-functionality. For example, by changing the implement **200** connected to multicopter **10,** various ground operations (agricultural work) including liquid application, granular application, fertilization, thinning, weeding, transplanting, direct seeding, and harvesting can be performed. The implement **200** may be equipped with mechanisms such as robotic hands. In that case, a single implement **200** can perform various ground operations. When the implement **200** is equipped with space large enough to store materials, the implement **200** can also transport agricultural materials or harvested crops over a wide area. There are various forms of connecting the implement **200** to the multicopter **10.** The multicopter **10** may suspend and tow the implement **200** using a cable. The implement **200** towed by the multicopter **10** can perform ground operations while being towed during flight or hovering of multicopter **10.** The implement **200** during operation may be in the air or on the ground.

In the example shown in FIG. **1C****,** the multicopter **10** is equipped with power supply **76.** The power supply **76** is a device that supplies power to the implement **200** from driving energy sources such as a battery **52** or an electric generator **8** included in the multicopter **10.** Various functions of the implement **200** may be performed using this power. The implement **200** includes actuators such as motors that operate using power obtained from the power supply **76** of the multicopter **10.** The implement **200** preferably includes a battery for storing power. The ESC **16** may be included in the control device **4a.**

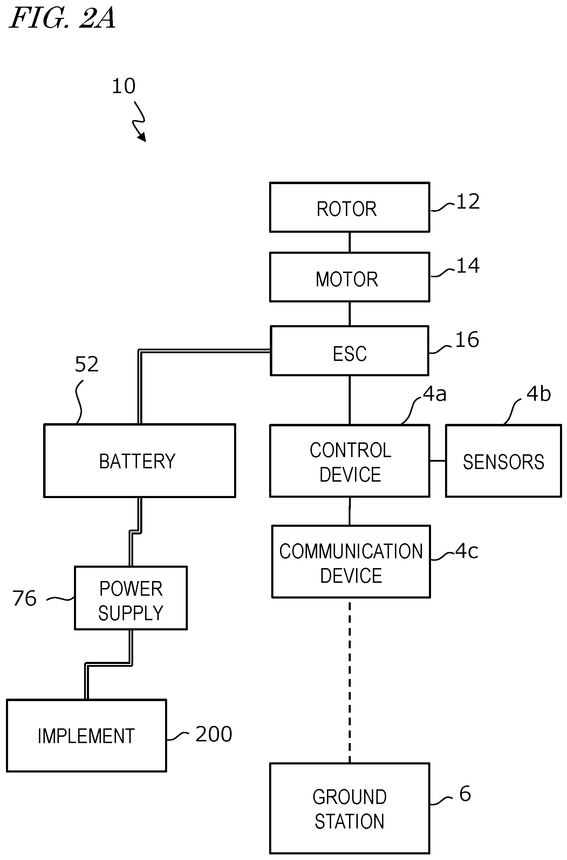

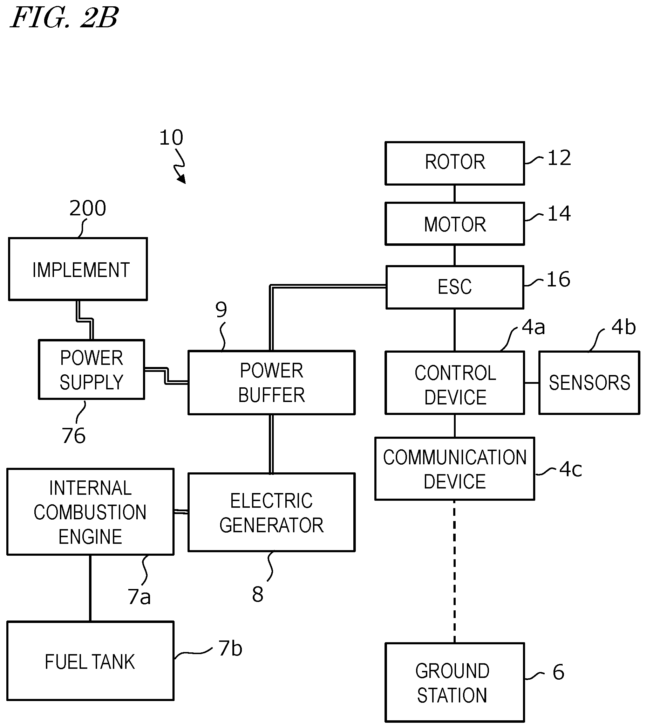

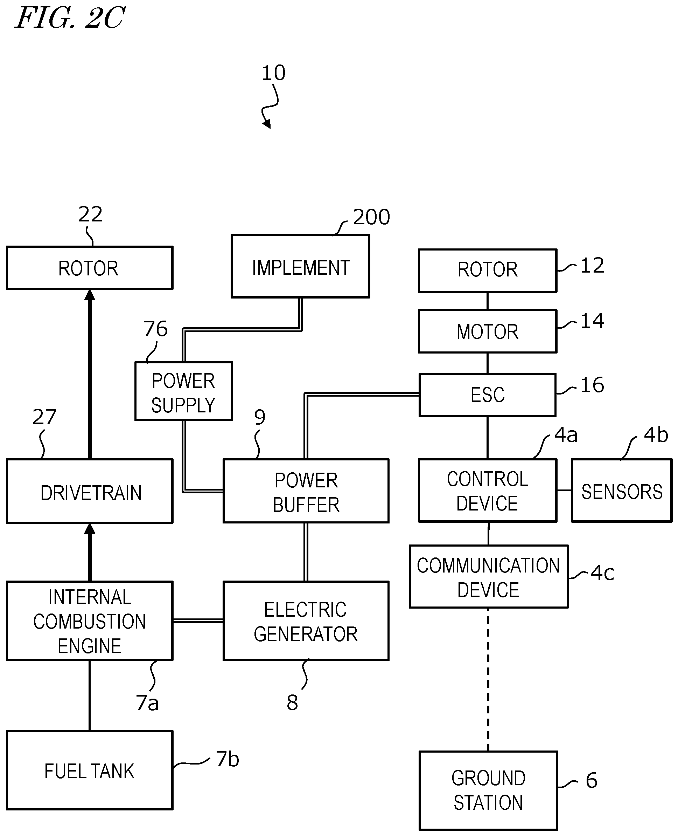

FIG. **2A** shows a block diagram of a basic configuration example of a battery-driven multicopter **10.** The battery-driven multicopter **10** includes a plurality of rotors **12,** a plurality of motors **14,** each driving a respective one of the plurality of rotors **12,** a plurality of ESCs (Electric Speed Controllers) **16** each including a motor drive circuit that drives a respective one of the plurality of motors **14,** a battery **52** that supplies power to each of the plurality of motors **14** through each respective ESC **16,** a control device **4a** for controlling a plurality of ESCs **16** to control attitude while flying, sensors **4b,** a communication device **4c,** and a power supply **76** that is electrically connected to the battery **52.** In FIG. **2A****,** for simplicity, the rotor **12,** the motor **14,** and the ESC **16** are each shown by a single block, but the numbers of rotors **12,** motors **14,** and ESCs **16** are each plural. This also applies to FIGS. **2B** and **2C****.**

The control device **4a** may receive control commands wirelessly from, for example, a ground station **6** on the ground through the communication device **4c.** The number of ground stations **6** is not limited to one, and the grand station 6 may be distributed across a plurality of locations. The communication device **4c** may also wirelessly receive control commands from an operator's remote controller on the ground. The control device **4a** may have functions to automatically or autonomously execute takeoff, flight, obstacle avoidance, and landing operations based on sensor data obtained from the sensors **4b.** The control device **4a** may be configured to communicate with the implement **200** connected to the power supply **76** and obtain signals indicating the state of the implement **200** from the implement **200.** Additionally, the control device **4a** may provide signals to control the operation of the implement **200.** Furthermore, the implement **200** may generate signals to instruct the operation of multicopter **10** and transmit them to the control device **4a.** Such communication between the control device **4a** and the implement **200** may be conducted through wired or wireless means.

FIG. **2B** is a block diagram showing a basic configuration example of a series hybrid drive type multicopter **10.** Like the battery-driven multicopter **10,** the series hybrid drive type multicopter **10** includes a plurality of rotors **12,** a plurality of motors **14,** a plurality of ESCs **16,** a control device **4a,** sensors **4b,** and a communication device **4c.** The series hybrid drive type multicopter **10** shown in the figure further includes an internal combustion engine **7a,** a fuel tank **7b** that stores fuel for the internal combustion engine **7a,** an electric generator **8** that is driven by the internal combustion engine **7a** to generate electric power, a power buffer **9** that temporarily stores electric power generated by the electric generator **8,** and a power supply **76** that is electrically connected to the power buffer **9.** The power buffer **9** is, for example, a battery such as a secondary battery. Electric power generated by the electric generator **8** is supplied to the motors **14** through the power buffer **9** and the ESCs **16.** Additionally, the electric power generated by the electric generator **8** may be supplied to the implement **200** through the power supply **76.**

FIG. **2C** is a block diagram showing a basic configuration example of a parallel hybrid drive type multicopter **10.** Like the series hybrid drive type multicopter **10,** the parallel hybrid drive type multicopter **10** includes a plurality of rotors **12,** a plurality of motors **14,** each driving a respective one of the plurality of rotors **12,** a plurality of ESCs **16,** a control device **4a,** sensors **4b,** a communication device **4c,** an internal combustion engine **7a,** a fuel tank **7b,** an electric generator **8,** a power buffer **9,** and a power supply **76.** The parallel hybrid drive type multicopter **10** further includes a drivetrain **27** that transmits driving force from the internal combustion engine **7a,** and the rotor **22** that rotates upon the receiving driving force from the internal combustion engine **7a** through the drivetrain **27.** The rotor **12** and rotor **22** may be distinguished by calling one "first rotor" and the other "second rotor". The number of rotors **22** connected to drivetrain **27** and rotated may be one or two or more.

In the parallel hybrid drive type multicopter **10,** the internal combustion engine **7a** not only drives the electric generator **8** to generate power, but also mechanically transmits energy to the rotor **22** to rotate the rotor **22.** In contrast, in the series hybrid drive type multicopter **10,** all rotors **12** are rotated by electric power generated by the electric generator **8.** Therefore, in the series hybrid drive type multicopter **10,** when the electric generator **8** is, for example, a fuel cell, the internal combustion engine **7a** is not an essential component.

As described above, the configuration of multicopter **10** is diverse. Multicopter **10** can perform tasks such as spraying chemicals, fertilizers, or seeds in fields, or performing operations like mowing by suspending implements. Additionally, multicopter **10** may also be used for applications that support ground operations performed by industrial machinery (such as agricultural or construction machinery) in coordination with the machinery. Agricultural machinery includes agricultural work vehicles such as tractors, combines, rice transplanters, and riding cultivators. Construction machinery includes construction and civil engineering work vehicles such as backhoes, wheel loaders, and carriers. Ground operations refer to operations performed on the ground, including agricultural tasks such as tilling, seeding, pest control, fertilizing, planting, and harvesting, as well as construction and civil engineering tasks such as ground excavation.

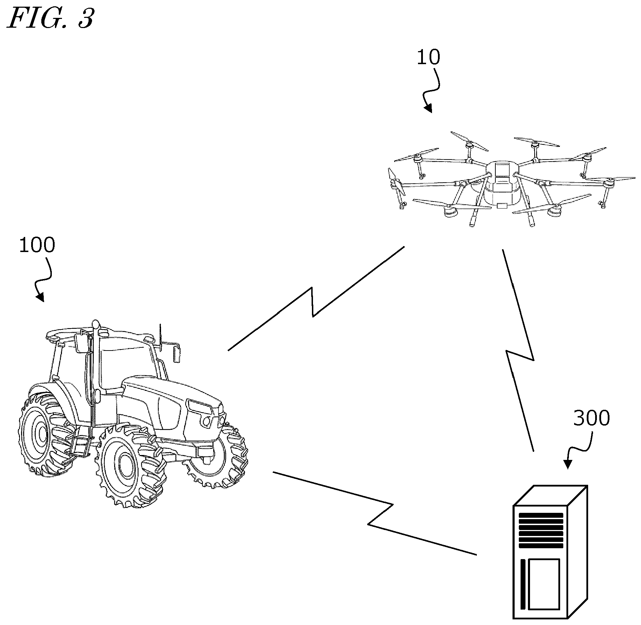

FIG. **3** shows an example of a system that includes a multicopter **10** and an agricultural work vehicle **100.** In this example, the work vehicle **100** is an agricultural tractor. The work vehicle **100** may be agricultural machinery other than a tractor or may be construction machinery. FIG. **3** also shows a server **300** that communicates with the multicopter **10** and the work vehicle **100.** The server **300** may be a cloud server computer installed in a data center or similar facility. The server **300** can communicate with the work vehicle **100** and the multicopter **10** via intermediary devices (such as multiple routers and switches within the network). Direct wireless communication and indirect communication via server **300** are both possible between the work vehicle **100** and the multicopter **10.** Note that while FIG. **3** shows one work vehicle **100** and one multicopter **10** as examples, the number of work vehicles **100** and multicopters **10** may each be two or more.

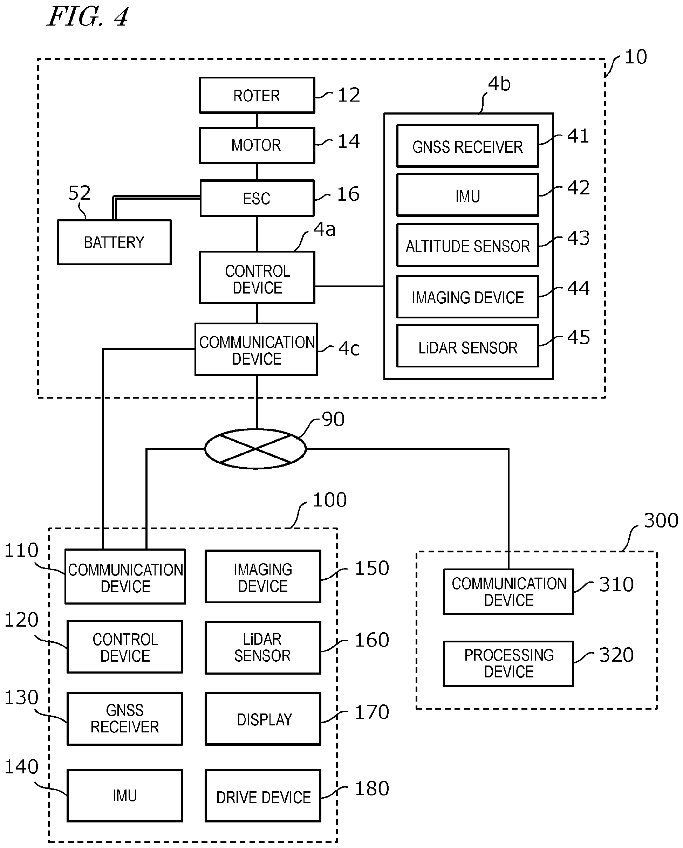

FIG. **4** is a block diagram showing an example configuration of the system shown in FIG. **3****.** In the example of FIG. **4****,** the multicopter **10,** similar to the example shown in FIG. **2A****,** includes a plurality of rotors **12,** a plurality of motors **14** each driving respective one of the plurality of rotors **12,** a battery **52** that stores electric power, a control device **4a** that controls the flight of the multicopter **10,** a communication device **4c,** and sensors **4b.** Note that the power supply **76** and implement **200** shown in FIG. **2A** are omitted from FIG. **4****.** In FIG. **4****,** for simplicity, the rotor **12,** the motor **14,** and the ESC **16** are each shown by a single block, but the numbers of rotors **12,** motors **14,** and ESCs **16** are each plural. Additionally, the multicopter **10** may be equipped with at least one second rotor **22** driven by an internal combustion engine **7a,** as shown in FIG. **2B** or FIG. **2C****.** In that case, either "series hybrid" or "parallel hybrid" drive format may be adopted.

FIG. **4** shows examples of sensors **4b** including a GNSS receiver **41,** an IMU **42,** an altitude sensor **43,** an imaging device **44,** and a LiDAR sensor **45.** The GNSS receiver **41** and IMU **42** serve as positioning devices that measure the position and attitude (pose) of the multicopter **10.** The altitude sensor **43** measures the altitude of the multicopter **10** body and outputs a signal indicating this altitude. Altitude refers to the vertical distance between a reference surface (such as the ground surface) and the body. The altitude sensor **43** may be implemented, for example, using a barometer, a distance measuring device that measures the distance from the body to the ground, or a combination of these. The imaging device **44** generates and outputs image data by capturing the surroundings of the multicopter **10.** The LiDAR sensor **45** is an example of a distance measuring device that measures the distance to objects existing around the multicopter **10.** The imaging device **44** and LiDAR sensor **45** are external sensors that sense the environment around the multicopter **10** and output sensor data.

The control device **4a** controls the operations of the multicopter **10** including flight and communication. The communication device **4c** is a communication module that communicates with external devices such as the work vehicle **100** and server **300.** The communication device **4c** may be configured to perform wireless communication using, for example, Wi-Fi (Wireless Fidelity, registered trademark), BLE (Bluetooth Low Energy), LPWA (Low Power Wide Area), specified low-power radio, or cellular communication networks such as 4G or 5G. The communication device **4c** can communicate with the communication device **110** in the work vehicle **100** either directly or indirectly via the network **90** and server **300.**

In the example of FIG. **4****,** the work vehicle **100** includes a communication device **110,** a control device **120,** a GNSS receiver **130,** an IMU **140,** an imaging device **150,** and a LiDAR sensor **160.** The functions of these devices are similar to those of the corresponding devices in the multicopter **10.** The work vehicle **100** further includes a display **170** and a drive unit **180** that includes an engine and driving equipment, etc.

The communication device **110** can communicate with the communication device **4c** of the multicopter **10** either directly or indirectly via the network **90** and server **300.** The control device **120** controls the operation of the work vehicle **100.** The GNSS receiver **130** and IMU **140** function as positioning devices that measure the position and attitude of the work vehicle **100.** The imaging device **150** and LiDAR sensor **160** function as external sensors that sense the environment around the work vehicle **100** and output sensor data. The display **170** displays a map of the area where the work vehicle **100** is traveling, and information such as the position and speed of both the work vehicle **100** and the multicopter **10.** The display **170** may be a terminal installed in the work vehicle **100** for operation, or it may be a mobile terminal used by a user of the work vehicle **100.**

The server **300** includes a communication device **310** that communicates with the communication device **4c** of the multicopter **10** and the communication device **110** of the work vehicle **100** via the network **90,** and a processing device **320** that executes processing based on information obtained from the multicopter **10** and the work vehicle **100.**

### <Communication System>

In the example shown in FIG. **4****,** the multicopter **10** is equipped with a communication system that includes the communication device **4c** and the control device **4a.** Similarly, the work vehicle **100** is equipped with a communication system that includes the communication device **110** and the control device **120.** These communication systems execute communication that enables the multicopter **10** and the work vehicle **100** to operate in coordination. Below, examples of the operation of the communication systems mounted on the multicopter **10** and the work vehicle **100** will be explained.

The control device **4a** in the multicopter **10** controls communication through the communication device **4c.** The control device **4a** changes the mode of communication with the work vehicle **100** according to the distance between the work vehicle **100** and the multicopter **10.** Similarly, the control device **120** in the work vehicle **100** controls communication through the communication device **110.** The control device **120** changes the mode of communication with the multicopter **10** according to the distance between the work vehicle **100** and the multicopter **10.**

The change in communication mode may include, for example, changes in the type of data transmitted, the frequency of communication, the volume of communication, or the communication method. For example, when the distance between the work vehicle **100** and the multicopter **10** is greater than a threshold (i.e., when they are far apart), they may share sensing information with each other. Sensing information may be obtained by external sensors such as imaging devices **44, 150,** LiDAR sensors **45, 160,** etc. Conversely, when the distance between the work vehicle **100** and the multicopter **10** is less than or equal to the threshold (i.e., when they are close), they may share information necessary for collision avoidance (such as position information, attitude information, and/or altitude information). Position information may be obtained by positioning devices such as GNSS receivers **41, 130.** Attitude information may be obtained by attitude detection sensors such as IMUs **42, 140.** Altitude information may be obtained by the altitude sensor **43.** Alternatively, when they are far apart, they may communicate indirectly via external computers such as server **300,** and when they are close, they may communicate directly via wireless communication.

The distance between the work vehicle **100** and the multicopter **10** may be calculated based on the respective position information output from the positioning devices (e.g., GNSS receivers **130** and **41)** mounted on each of the work vehicle **100** and the multicopter **10.** That is, the control devices **120** and **4a** may be configured to obtain position information of the work vehicle **100** from the positioning device mounted on the work vehicle **100,** obtain position information of the multicopter **10** from the positioning device mounted on the multicopter **10,** and calculate the distance between the work vehicle **100** and the multicopter **10** based on these position information. Alternatively, the control devices **120** and **4a** may obtain information indicating the distance between the work vehicle **100** and the multicopter **10** from a distance measuring device (such as LiDAR sensors **160** or **45)** mounted on the work vehicle **100** or the multicopter **10.** Additionally, the distance between the work vehicle **100** and the multicopter **10** may be measured using a beacon transmitter mounted on one of the work vehicle **100** and the multicopter **10,** and a beacon receiver mounted on the other.

Below, several examples of methods for changing communication modes according to the distance between the work vehicle **100** and the multicopter **10** will be explained. In the following explanation, unless otherwise specified, the acting entity will be the control device **4a** in the multicopter **10.** Each of the communication methods explained below may also be executed similarly by the control device **120** in the work vehicle **100.** This enables sharing of information between the work vehicle **100** and the multicopter **10.**

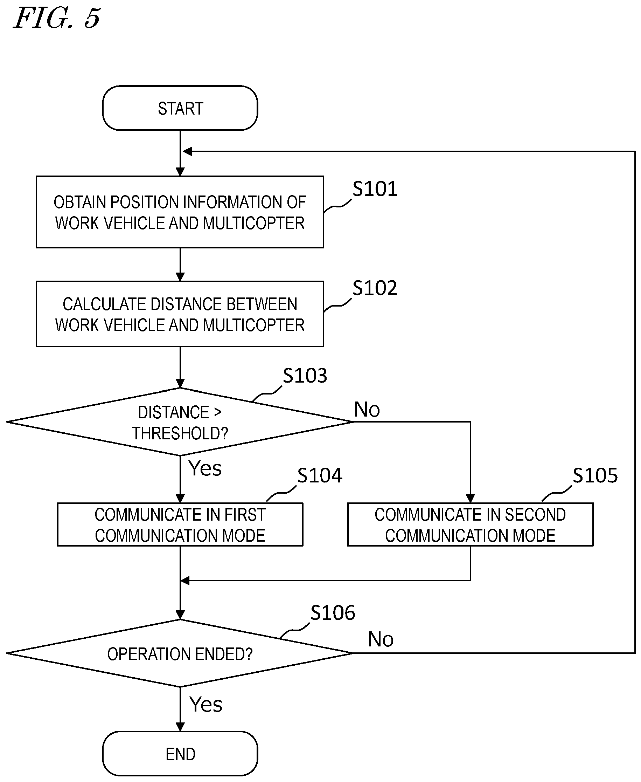

FIG. **5** is a flowchart showing an example of a communication method executed by the control device **4a.**

In step **S101,** the control device **4a** obtains the respective position information of the work vehicle **100** and the multicopter **10** from their respective positioning devices. The position information may include, for example, latitude and longitude information measured by the GNSS receiver **41.**

In step **S102,** the control device **4a** calculates the distance between the work vehicle **100** and the multicopter **10** based on the obtained position information. The control device **4a** can calculate the distance between the two by taking the difference between the position of the work vehicle **100** and the position of the multicopter **10.**

Note that instead of the operations in steps **S101** and **S102,** distance information between the work vehicle **100** and the multicopter **10** may be obtained using a distance measuring device or beacon as described above.

In step **S103,** the control device **4a** compares the calculated distance with a threshold. The threshold is previously stored in a storage device such as the memory of the control device **4a.** The threshold is a predetermined value such as 5m, 10m, or 20m, and is determined according to the purpose or application of the system. If the distance is greater than the threshold, proceed to step **S104.** If the distance is less than or equal to the threshold, proceed to step **S105.**

In step **S104,** the control device **4a** executes communication with the work vehicle **100** in a first communication mode. In the first communication mode, the control device **4a** may be configured to transmit position information obtained from the positioning device (e.g., GNSS receiver **41)** of the multicopter **10** to the work vehicle **100** via the communication device **4c.** Alternatively, in the first communication mode, the control device **4a** may transmit sensor data obtained from external sensors (such as imaging device **44** or LiDAR sensor **45)** mounted on the multicopter **10** to the work vehicle **100** via the communication device **4c.** The control device **4a** may transmit both position information and sensor data to the work vehicle **100** in the first communication mode. By transmitting position information and/or sensor data to the work vehicle **100,** the control device **120** of the work vehicle **100** can, for example, display information such as the position of the multicopter **10** or images obtained by sensing on the display **170.**

In step **S105,** the control device **4a** executes communication with the work vehicle **100** in a second communication mode that is different from the first communication mode. In the second communication mode, the control device **4a** may be configured to transmit, in addition to position information and/or sensor data, attitude information obtained from the attitude detection sensor (e.g., IMU **42)** mounted on the multicopter **10** and/or altitude information obtained from the altitude sensor **43** to the work vehicle **100** via the communication device **4c.** By transmitting attitude information and/or altitude information in addition to position information to the work vehicle **100,** it becomes easier for the work vehicle **100** to detect the multicopter **10** as an obstacle, making it easier to avoid collision between the work vehicle **100** and the multicopter **10.**

Communication in the first communication mode in step **S104** and communication in the second communication mode in step **S105** may each be repeated at predetermined time intervals. In that case, communication in the second communication mode may be executed at shorter time intervals than communication in the first communication mode. Also, in communication in the first communication mode in step **S104,** the control device **4a** may be configured to indirectly transmit data to the work vehicle **100** via an external computer, the server **300** in the cloud, using public networks such as 4G or 5G. This is because when the distance between the work vehicle **100** and the multicopter **10** is large, there is no possibility of collision between them, so the speed and frequency of communication between them can be low. Conversely, in communication in the second communication mode in step **S105,** the control device **4a** may be configured to directly transmit data to the work vehicle **100** using wireless communication such as Wi-Fi (registered trademark), Bluetooth, or specified low-power radio. This is because when the distance between the work vehicle **100** and the multicopter **10** is short, to avoid collision, it is desirable to increase the speed and frequency of communication between them, exchanging information such as position and attitude at short time intervals.

In step **S106,** the control device **4a** determines whether to end the operation. For example, if a pre-programmed flight has ended, or if an instruction to end the operation has been received from an external device such as a control device or remote monitoring device, the control device **4a** ends the operation. The control device **4a** repeats the operations from steps **S101** to **S106** until it determines to end the operation.

The operations shown in FIG. **5** may be executed not only by the control device **4a** of the multicopter **10** but also by the control device **120** of the work vehicle **100.** That is, the control device **120** of the work vehicle **100** may transmit position information obtained from the positioning device (e.g., GNSS receiver **130)** mounted on the work vehicle **100** to the multicopter **10** via the communication device **110** when the distance between the work vehicle **100** and the multicopter **10** is greater than the threshold. The control device **120** may also transmit sensor data obtained from external sensors (such as imaging device **150** or LiDAR sensor **160)** mounted on the work vehicle **100** to the multicopter **10** via the communication device **110** when that distance is greater than the threshold. Conversely, when that distance is less than or equal to the threshold, the control device **120** may transmit attitude information obtained from the attitude detection sensor (e.g., IMU **140)** mounted on the work vehicle **100** in addition to position information to the multicopter **10** via the communication device **4c.** Furthermore, when that distance is greater than the threshold, the control device **120** may execute communication with the multicopter **10** via the server **300,** and when that distance is less than or equal to the threshold, it may execute direct communication with the multicopter **10.**

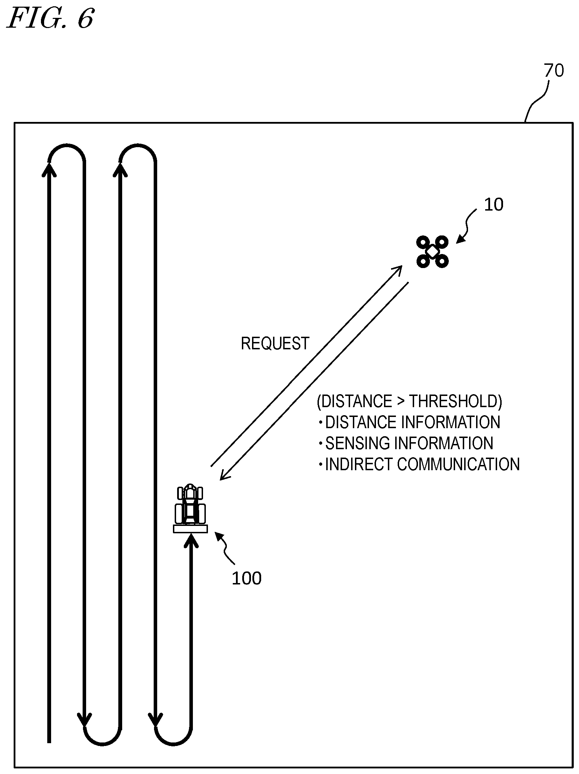

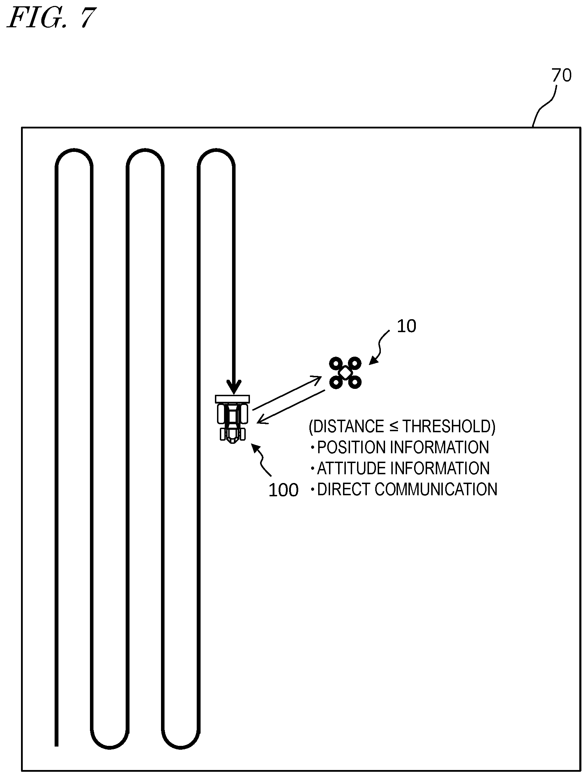

Next, more specific examples of the communication method according to this embodiment will be explained with reference to FIGS. **6** and **7****.**

FIGS. **6** and **7** show an example of a communication method in a system where the work vehicle **100** and the multicopter **10** operate in coordination. FIG. **6** shows a state where the distance between the work vehicle **100** and the multicopter **10** is greater than the threshold. FIG. **7** shows a state where the distance between the work vehicle **100** and the multicopter **10** is less than or equal to the threshold.

In this example, the work vehicle **100** travels along a predetermined travel path while performing agricultural work such as spreading fertilizer, chemicals, or seeds, planting crop seedlings, harvesting crops, or mowing grass in a field **70.** The work vehicle **100** shown in FIG. **6** is a tractor that performs agricultural work by driving the implement connected to the work vehicle **100.** The work vehicle **100** is not limited to tractors but may be, for example, a transplanter such as a rice transplanter, or a harvester such as a combine. Furthermore, the work vehicle **100** is not limited to agricultural machinery and may be construction machinery.

The travel path of the work vehicle **100** shown in FIG. **6** meanders regularly as indicated by the thick arrows in the figure. The work vehicle **100** may travel by manual driving by a user or by autonomous driving. In the case where the work vehicle **100** travels by autonomous driving, map information of the field **70** and information on the travel path are previously recorded in the storage device of the work vehicle **100.** The control device **120** can make the work vehicle **100** travel along the pre-set travel path based on position information and attitude information output from the positioning device including the GNSS receiver **130** and IMU **140.**

The multicopter **10** flies around the work vehicle **100** and supports the ground operations performed by the work vehicle **100.** For example, when the work vehicle **100** performs spreading of fertilizer, chemicals, or seeds, or planting of crop seedlings, the multicopter **10** may be configured to perform the transport operation of delivering such agricultural materials to the work vehicle **100** when the remaining amount of agricultural materials (fertilizer, chemicals, seeds, or seedlings, which may hereinafter be referred to as "agricultural materials" or simply "materials") becomes low. Alternatively, when the work vehicle **100** is a harvester that harvests crops, the multicopter **10** may be configured, for example, to receive harvested crops accumulated in the tank of the work vehicle **100** and transport them to a designated location.

In such a system, the work vehicle **100** may be equipped with sensors that measure the remaining amount of materials or the amount of harvested crops. The control device **120** may be configured to transmit a request to call the multicopter **10** to the multicopter **10** by controlling the communication device **110** based on signals output from the sensors. The control device **4a** of the multicopter **10** may be configured to fly the multicopter **10** to the vicinity of the work vehicle **100** in response to the request from the work vehicle **100.**

While the multicopter **10** is flying, the control device **4a** executes the operations shown in FIG. **5****.** That is, the control device **4a** determines whether the distance between the work vehicle **100** and the multicopter **10** is greater than the threshold. If that distance is greater than the threshold, it performs communication using the first communication mode, and when that distance becomes less than or equal to the threshold, it changes the communication mode from the first communication mode to the second communication mode. FIG. **6** shows an example of communication using the first communication mode, and FIG. **7** shows an example of communication using the second communication mode. In the first communication mode shown in FIG. **6****,** the control device **4a** of the multicopter **10** transmits position information obtained by the GNSS receiver **41** and sensing information obtained by the imaging device **150** and LiDAR sensor **160** to the work vehicle **100.** Also, communication between the multicopter **10** and the work vehicle **100** is conducted indirectly via the server **300.** In contrast, in the second communication mode shown in FIG. **7****,** the control device **4a** transmits position information obtained by the GNSS receiver **41** and attitude information obtained by the IMU **140** to the work vehicle **100.** Also, communication between the multicopter **10** and the work vehicle **100** is conducted through direct wireless communication. This allows high-frequency transmission of position information and attitude information to the work vehicle **100** when the multicopter **10** approaches the work vehicle **100,** making it easier for the work vehicle **100** to accurately grasp the position and attitude of the multicopter **10** based on that information. This enables the work vehicle **100** to perform proper alignment for the handover of materials or harvested crops without colliding with the multicopter **10.**

In both the first communication mode and the second communication mode, not only may information be transmitted from the multicopter **10** to the work vehicle **100,** but information may also be transmitted from the work vehicle **100** to the multicopter **10.** For example, in the first communication mode, the work vehicle **100** and the multicopter **10** may share each other's position information and/or sensing information. In the second communication mode, the work vehicle **100** and the multicopter **10** may share each other's position information and/or attitude information. By transmitting this information from the work vehicle **100** to the multicopter **10,** it becomes easier for the multicopter **10** to accurately grasp the position and attitude of the work vehicle **100.** This enables the multicopter **10** to position itself properly for handover of materials or harvested crops without colliding with the work vehicle **100.**

Thus, bidirectional communication may be conducted between the multicopter **10** and the work vehicle **100,** or unidirectional communication may be conducted from one to the other.

Note that the changes in the information transmitted and the communication method in the first communication mode and the second communication mode in the examples of FIGS. **6** and **7** are merely illustrative, and various modifications are possible. For example, the control device **4a** of the multicopter **10** may transmit position information in the first communication mode, and in the second communication mode, may transmit altitude information obtained by the altitude sensor **43** in addition to position information and attitude information to the work vehicle **100.** Adding altitude information enables the work vehicle **100** to grasp the position of the multicopter **10** more accurately. Also, the control device **4a** or the control device **120** may transmit the same type of information in both the first communication mode and the second communication mode, but may make the communication frequency in the second communication mode higher than the communication frequency in the first communication mode. For example, information may be transmitted at a first time interval (e.g., 0.1 seconds or more and less than 1 second) in the first communication mode, and at a shorter second time interval (e.g., 0.01 seconds or more and less than 0.1 seconds) in the second communication mode.

In the examples of FIGS. **6** and **7****,** the multicopter **10** supports the work of the work vehicle **100,** but these roles may be reversed. For example, the multicopter **10** may perform ground operations such as spraying agricultural materials like chemicals, fertilizers, or seeds, harvesting crops, or mowing grass by driving the implement **200** as shown in FIG. **1C****,** and the work vehicle **100** may provide support such as transporting agricultural materials, harvested crops, or cut grass. In that case as well, the communication method described above can be applied similarly.

In the above examples, the multicopter **10** receives position information of the work vehicle **100** measured by the positioning device of the work vehicle **100,** and the work vehicle **100** obtains position information of the multicopter **10** measured by the positioning device of the multicopter **10.** The position information of each communication partner is not limited to being obtained from that communication partner. For example, each of the multicopter **10** and the work vehicle **100** may estimate the position of the communication partner based on data output from its sensing device such as an imaging device and/or LiDAR sensor. For example, they may recognize the communication partner based on image data output from a sensing device such as a stereo camera and/or distance data or point cloud data output from a laser sensor such as a LiDAR sensor, and identify its position.

Thus, the communication method of this embodiment enables sharing of necessary information between the work vehicle **100** and the multicopter **10** with high accuracy and in real-time. This allows the work vehicle **100** and the multicopter **10** to approach without colliding, making it possible to perform cooperative work such as material replenishment or handover of harvested materials. For example, it is possible for the work vehicle **100** and the multicopter **10** to perform cooperative work such that their positions overlap in a plan view without making contact. Such cooperative work may also be referred to as "collaborative work".

In the above examples, the communication mode is changed based on the comparison result of the distance between the work vehicle **100** and the multicopter **10** with a single threshold, but the communication mode may be changed in multiple stages based on the comparison results with two or more thresholds.

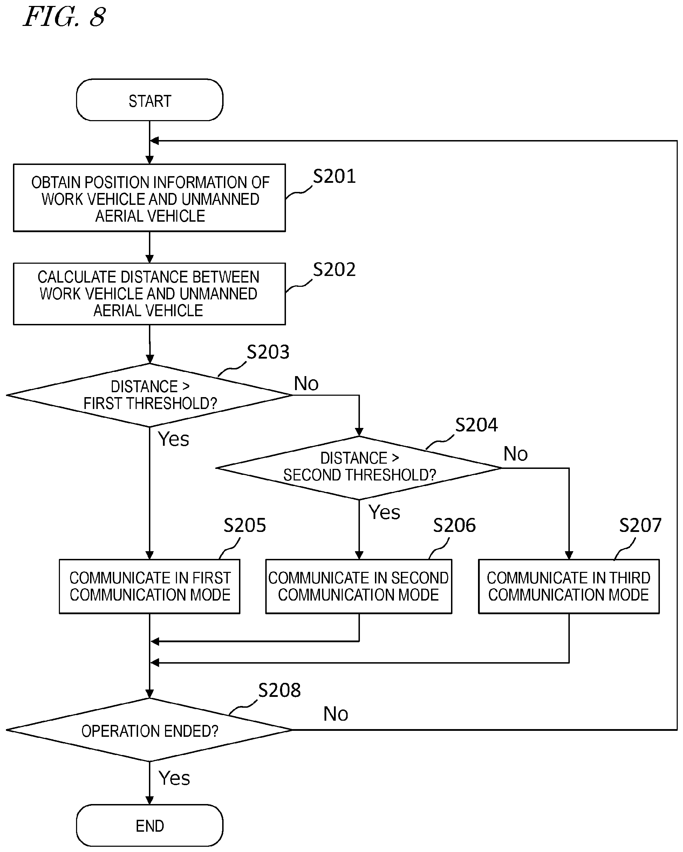

FIG. **8** is a flowchart showing an example where the communication mode changes in three stages according to the distance between the work vehicle **100** and the multicopter **10.** The operations shown in FIG. **8** may be executed by either or both of the control device **4a** of the multicopter **10** and the control device **120** of the work vehicle **100.** Below, it will be explained assuming that the control device **4a** of the multicopter **10** executes the operations shown in FIG. **8****.** In this example, the operations in steps **S201, S202,** and **S208** are the same as the operations in steps **S101, S102,** and **S106** respectively, so their explanation is omitted.

In step **S203,** the control device **4a** determines whether the distance between the work vehicle **100** and the multicopter **10** is greater than a first threshold. If the distance is greater than the first threshold, proceed to step **S205,** and the control device **4a** performs communication in the first communication mode. After step **S205,** proceed to step **S208.** If the distance is less than or equal to the first threshold, proceed to step **S204.**

In step **S204,** the control device **4a** determines whether the distance between the work vehicle **100** and the multicopter **10** is greater than a second threshold that is smaller than the first threshold. If the distance is greater than the second threshold, proceed to step **S206,** and the control device **4a** performs communication in the second communication mode. After step **S206,** proceed to step **S208.** If the distance is less than or equal to the second threshold, proceed to step **S207,** and the control device **4a** performs communication in the third communication mode. After step **S207,** proceed to step **S208.**

The operations shown in FIG. **8** allow the communication mode to be changed in three stages according to the distance between the work vehicle **100** and the multicopter **10.** The first communication mode may be a mode that transmits position information through indirect communication. The second communication mode may be a mode that transmits position information and attitude information through direct communication. The third communication mode may be a mode that transmits position information, attitude information, and altitude information through direct communication. Sensing information may also be transmitted in each mode. In this way, by transmitting more types of information or increasing the communication speed or transmission frequency as the distance between the work vehicle **100** and the multicopter **10** becomes shorter, information communication for coordination between the work vehicle **100** and the multicopter **10** can be executed more appropriately. Note that the control devices **4a** and **120** may change the communication mode in four or more stages according to the distance between the work vehicle **100** and the multicopter **10.**

The information communication method in this disclosure is not limited to the above examples. Below, other communication methods are exemplified.

The control devices **4a** and **120** may share position information measured by their respective positioning devices when the distance between the multicopter **10** and the work vehicle **100** is longer than the threshold, and may share more detailed information about relative position obtained using imaging devices or beacons when the distance falls below the threshold.

The control device **4a** of the multicopter **10** may switch sensors used for sensing, such as LiDAR, depending on the relative position to the work vehicle **100.** For example, when the multicopter **10** is flying at a position higher than the height of the work vehicle **100,** it may transmit sensor data obtained by sensors that sense the area below the multicopter **10,** and when the multicopter **10** is flying at a position lower than the height of the work vehicle **100,** it may transmit sensor data obtained by sensors that sense the area to the side of the multicopter **10.**

The communication method may be changed depending on the relative speed between the work vehicle **100** and the multicopter **10** in addition to the distance between them. For example, communication may be conducted via public lines and server **300** when the relative speed is less than or equal to a threshold, and direct communication may be conducted between the work vehicle **100** and the multicopter **10** when the relative speed exceeds the threshold.

### <Information Display System>

The control device **120** in this embodiment also functions as a display system that displays on the display **170** the positions of the work vehicle **100** and one or more multicopters **10** flying around the work vehicle **100.** The display system is a system capable of displaying on the display **170** the relative positions of the work vehicle **100,** which can perform ground operations while moving, and the flying multicopter **10.**

The control device **120** includes a processing device that obtains position information of the work vehicle **100** and the unmanned aerial vehicle **10,** and based on the position information, displays the positions of the work vehicle **100** and the unmanned aerial vehicle **10** in a field (i.e., display area) shown on the display **170.** The display **170** may be included in the display system or may be an element external to the display system.

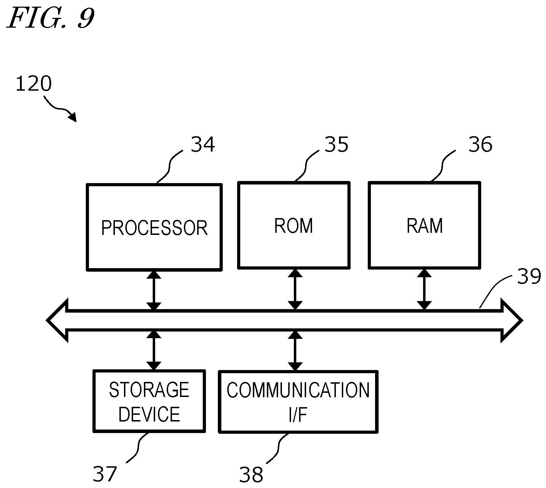

FIG. **9** is a block diagram showing an example of the hardware configuration of the control device **120.** The control device **120** includes a processor **34** which is a processing device, a ROM (Read Only Memory) **35,** a RAM (Random Access Memory) **36,** a storage device **37,** and a communication I/F **38.** These components are interconnected via a bus **39.**

The processor **34** is one or more semiconductor integrated circuits, also referred to as a central processing unit (CPU) or microprocessor. The processor sequentially executes computer programs stored in the ROM **35** to implement various processes. The processor is broadly interpreted to include terms such as FPGA (Field Programmable Gate Array) with CPU, GPU (Graphic Processor Unit), ASIC (Application Specific Integrated Circuit), or ASSP (Application Specific Standard Product).

The ROM **35** is, for example, a writable memory (for example, PROM), rewritable memory (for example, flash memory), or read-only memory. The ROM **35** stores programs that control the operation of the processor. The ROM **35** need not be a single recording medium but may be a collection of a plurality of recording media. Part of the plurality of collections may be removable memory.

The RAM **36** provides a work area for temporarily expanding programs stored in the ROM **35** during boot-up. The RAM **36** need not be a single recording medium but may be a collection of a plurality of recording media.

The communication I/F **38** is an interface for communication between the control device **120** and other electronic components or electronic control units (ECUs). For example, the communication I/F **38** may perform wired communication complying with various protocols. The communication I/F **38** may also perform wireless communication complying with Bluetooth^{®} standards and/or Wi-Fi^{®} standards. Both standards include wireless communication standards utilizing the 2.4 GHz frequency band.

The storage device **37** may be, for example, a semiconductor memory, magnetic storage device, or optical storage device, or a combination thereof. The storage device **37** is configured to store, for example, map data (map information) useful for autonomous driving of the work vehicle **100,** and various sensor data acquired by the work vehicle **100** while traveling.

Note that the control device **4a** of the multicopter **10** may also have a hardware configuration similar to that shown in FIG. **9****.** The control device **4a,** as mentioned earlier, may include, for example, a flight control device such as a flight controller and a higher-level computer (companion computer). The companion computer may execute the various processes described above and provide instructions related to flight to the flight controller based on the results of those processes.

In this embodiment, the display **170** is mounted on the work vehicle **100.** The display **170** may be embedded in or connected to a computer used by a user who monitors the operation of the work vehicle **100** from a location spaced away from the work vehicle **100.** The computer used by the user may be a mobile terminal such as a smartphone or tablet computer, or it may be a stationary computer such as a personal computer (PC) or workstation.

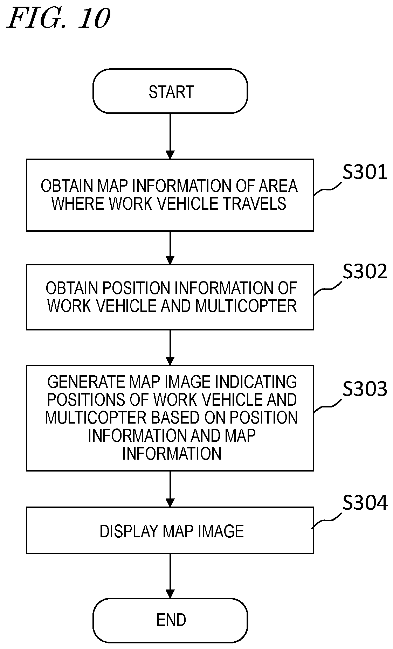

FIG. **10** is a flowchart showing an example of processing executed by the processor **34** (processing device) in the control device **120.** In this example, the processor **34** obtains information about a map of the area where the work vehicle **100** is located, generates a map image that overlays the positions of the work vehicle **100** and unmanned aerial vehicle **10** on the map, and displays the map image in the field of the display **170.**

In step **S301,** the processor **34** obtains map information of the area where the work vehicle **100** travels. The map information is previously stored in the storage device **37** of the control device **120.** The map information may include, for example, position information (such as latitude and longitude) of the field and surrounding topographical features where the work vehicle **100** travels. The processor **34** obtains the map information from the storage device **37.** Note that the processor **34** may also obtain map information from an external device such as server **300.**

In step **S302,** the processor **34** obtains position information of the work vehicle **100** and the multicopter **10.** The processor **34** obtains position information of the work vehicle **100** output from a positioning device such as the GNSS receiver **130** in the work vehicle **100.** The processor **34** obtains position information of the multicopter **10** output from a positioning device such as the GNSS receiver **41** of the multicopter **10** via the communication devices **4c** and **110.**

In step **S303,** the processor **34** generates a map image that overlays the positions of the work vehicle **100** and the multicopter **10** on the map based on the position information and map information. The map image may be an image that superimposes icons indicating the positions of the work vehicle **100** and the multicopter **10** on a map of the field. The processor **34** may also obtain speed information of the work vehicle **100** and the multicopter **10** in addition to the position information, and generate a map image that further shows the direction of movement of the work vehicle **100** and the multicopter **10** based on the speed information.

In step **S304,** the processor **34** displays the generated map image on the display **170.** The processor **34** may display a moving image showing changes in the positions of the work vehicle **100** and the multicopter 10 on the display **170** by repeatedly executing the operations from steps **S301 to S304.**

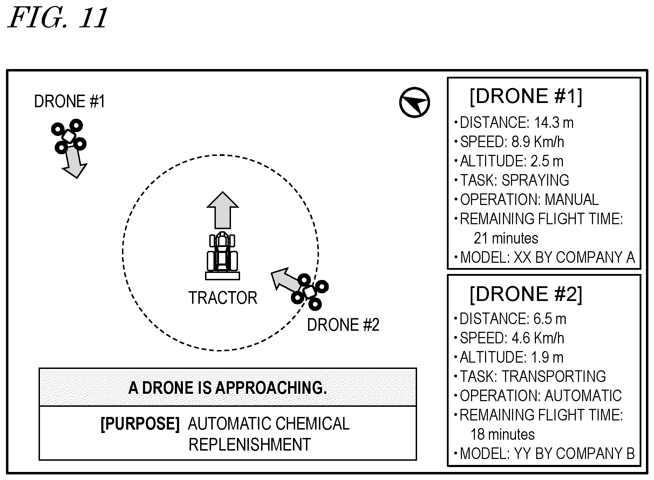

FIG. **11** shows an example of a map image displayed on the display **170.** In this example, two multicopters **10** (Drone #1 and Drone #2) are flying around the work vehicle **100,** which is a tractor. The processor **34** in the work vehicle **100** sequentially receives position information and speed information from each of the two multicopters **10,** and displays a map image as shown in FIG. **11** on the display **170.** In this example, two multicopters **10** are flying around the work vehicle **100,** but one or three or more multicopters **10** may be flying around the work vehicle **100.**

Communication based on distance, as described earlier, may be performed between the work vehicle **100** and each multicopter **10,** or communication sharing necessary information such as identifiers (IDs) and position information may be performed regardless of distance. Information about multicopters **10** that do not perform collaborative work with the work vehicle **100,** not just multicopters **10** that perform collaborative work with the work vehicle **100** as described earlier, may be transmitted to the work vehicle **100** and displayed. Communication between the work vehicle **100** and each multicopter **10** may be conducted through direct wireless communication or via a cloud server **300.**

In the example of FIG. **11****,** the processor **34** generates a map image showing the positions and movement directions of each multicopter **10** centered on the position of the work vehicle **100,** and displays it on the display **170.** More specifically, the processor **34** generates a map image that includes icons for the work vehicle **100** and each multicopter **10,** and arrows indicating the movement directions of the work vehicle **100** and each multicopter **10,** and displays it on the display **170.** The processor **34** may obtain flight path information from each multicopter **10** and generate and display on the display **170** a map image that includes information about future flight paths. The processor **34** sequentially obtains position information and speed information of the work vehicle **100** and each multicopter **10,** and sequentially updates the display of the positions and movement directions of the work vehicle **100** and each multicopter **10** in the map image. Information transmitted from each multicopter **10** to the work vehicle **100** includes the ID of that multicopter **10.** The work vehicle **100** can identify information from individual multicopters **10** based on those IDs.

In the example shown in FIG. **11****,** the processor **34** obtains operation information indicating the operating state of each multicopter **10** and, based on this operation information, displays the operating state of each multicopter **10** on the display **170** along with the map image. On the right side of FIG. **11****,** examples of the operating states of the two multicopters **10** (Drone #1 and Drone #2) are shown. The operating state may include at least one of: the content of the work being performed by the multicopter **10** (spraying, transport, mowing, etc.), whether the multicopter **10** is flying in autonomous mode (unmanned operation), the remaining flight time of the multicopter **10** (or energy remaining), and the energy remaining of the multicopter **10.** In the example of FIG. **11****,** the operating information includes the distance from the work vehicle **100,** altitude, work content, operation mode (automatic or manual operation), and remaining flight time for each multicopter **10.** In the example of FIG. **11****,** the model name (manufacturer and model number, etc.) identified from the ID of each multicopter **10** is also displayed.

In the example of FIG. **11****,** a dashed circle indicating a predetermined distance range from the position of the work vehicle **100** is shown. The processor **34** may output a warning (alert) to the display **170** if any multicopter **10** enters within the predetermined distance range from the position of the work vehicle **100.** In the example of FIG. **11****,** one multicopter **10** (Drone #2) has approached the work vehicle **100** and entered within the predetermined distance range. At this time, the processor **34** displays the message "A DRONE IS APPROACHING." as an alert on the display **170.** When a multicopter **10** is intentionally approaching the work vehicle **100** for collaborative work, the work purpose may be displayed. The processor **34** may display information indicating the purpose of the multicopter's approach (for example, automatic chemical replenishment) on the display **170,** as shown in FIG. **11****.**

The alert is not limited to display on the display **170,** but may be expressed, for example, by a warning sound from a speaker, light from a light source, or vibration. The alert may change depending on the distance between the work vehicle **100** and the multicopter **10.** For example, the processor **34** may change the interval of warning sounds, vibrations, or light alerts according to the distance between the work vehicle **100** and the multicopter **10.** As one example, as the multicopter **10** approaches the work vehicle **100,** when the distance falls below a first threshold, an intermittent sound with long intervals such as "beep, ... beep, ..." may be output as an alert, and when the distance falls below a second threshold smaller than the first threshold, an intermittent sound with short intervals such as "beep, beep, beep" may be output as an alert. Note that the distance between the work vehicle **100** and the multicopter **10** may be a distance in three-dimensional space or a distance in plan view.

Note that in the examples of FIGS. **10** and 11, the processor **34** displays a map image that overlays the positions of the work vehicle **100** and each unmanned aerial vehicle **10** on a map on the display **170,** but is not limited to such a display. The positions of the work vehicle **100** and each multicopter **10** may be displayed in other formats, such as a radar display.

Thus, the display system in this embodiment displays an image showing the relative positional relationship between a work vehicle **100** capable of ground operations and one or more multicopters **10** positioned around it (for example, within a certain distance range) on the display **170.** This enables the user of the work vehicle **100** (for example, the driver or supervisor) to grasp information such as the position and speed of multicopters **10** existing around the work vehicle **100.** When the work vehicle **100** is, for example, a tractor with a cabin, and the user is riding in the tractor, it is generally difficult for the user to accurately grasp the positions of surrounding multicopters **10.** By adopting the display system of this embodiment, it becomes easier for the user to immediately grasp the position of each surrounding multicopter **10.**

Note that in the above example, the position of the work vehicle **100** is centered and information such as the positions of one or more multicopters **10** around it is displayed, but a similar display may be made with the position of a specific multicopter **10** as the center. In that case, an image including position information of one or more multicopters **10** and one or more work vehicles **100** existing around the specific multicopter **10** may be displayed on the display **170.**

In this embodiment, the processor **34** (i.e., processing device) included in the control device **120** of the work vehicle **100** generates a map image containing information such as the positions of the work vehicle **100** and the multicopter **10,** but other processing devices may execute this processing. For example, the processing device **320** in the server **300** may receive necessary information from each of the work vehicle **100** and the multicopter **10,** generate a map image based on that information, and transmit it to the display **170.** Alternatively, a processor included in the display **170** may generate and display the map image. Similar displays may be made on displays other than the display **170** in the work vehicle **100,** such as display terminals for remote monitoring of the work vehicle **100** or the multicopter **10.**

The work vehicle in the above embodiment is not limited to agricultural machinery such as tractors but may be construction machinery. For example, the communication method and display method of this disclosure may be applied to a system including one or more work vehicles for construction and civil engineering, such as backhoes, wheel loaders, carriers, etc., and one or more unmanned aerial vehicles.

This specification discloses solutions described in the following items.

[Item 1] A display system configured to display, on a display, positions of a work vehicle and one or more unmanned aerial vehicles that are flying around the work vehicle, comprising
a processing device configured to obtain position information of the work vehicle and the unmanned aerial vehicles, and to display the positions of the work vehicle and the unmanned aerial vehicles in a field displayed on the display, based on the position information.

[Item 2] The display system according to Item 1, wherein the processing device is configured to further obtain speed information of the work vehicle and the unmanned aerial vehicles, and based on the speed information, to display, in the field, movement directions of the work vehicle and the unmanned aerial vehicles together with the positions of the work vehicle and the unmanned aerial vehicles.

[Item 3] The display system according to Item 2, wherein the processing device is configured to display the position and the movement direction of each of the unmanned aerial vehicles with the position of the work vehicle as a center in the field.

[Item 4] The display system according to Item 2 or 3, wherein the processing device is configured to display icons of the work vehicle and each of the unmanned aerial vehicles, and arrows indicating the movement directions of the work vehicle and each of the unmanned aerial vehicles in the field.

[Item 5] The display system according to any one of Items 2 to 4, wherein the processing device is configured to sequentially obtain the position information and the speed information of the work vehicle and each of the unmanned aerial vehicles, and sequentially update the display of the positions and the movement directions of the work vehicle and each of the unmanned aerial vehicles in the field.

[Item 6] The display system according to any one of Items 1 to 5, wherein the processing device is configured to further obtain operation information indicating an operating state of each of the unmanned aerial vehicles, and based on the operation information, display the operating state of each of the unmanned aerial vehicles on the display together with the field.

[Item 7] The display system according to Item 6, wherein the operating state includes at least one of: content of the work being performed by the unmanned aerial vehicle, whether the unmanned aerial vehicle is flying in autonomous mode, a remaining flight time of the unmanned aerial vehicle, or a remaining energy of the unmanned aerial vehicle.

[Item 8] The display system according to any one of Items 1 to 7, wherein the processing device is configured to output an alert to the display when any unmanned aerial vehicle enters within a predetermined distance from the position of the work vehicle.

[Item 9] The display system according to any one of Items 1 to 8, wherein the processing device is configured to obtain information of a map of an area where the work vehicle is located, generate a map image that overlays the positions of the work vehicle and the unmanned aerial vehicles on the map, and display the map image in the field.

[Item 10] The display system according to any one of Items 1 to 9, further comprising the display.

[Item 11] A work vehicle comprising the display system according to any one of Items 1 to 10.

[Item 12] A display method in a system including a work vehicle and one or more unmanned aerial vehicles flying around the work vehicle, comprising:
obtaining position information of the work vehicle and the unmanned aerial vehicles; and
displaying positions of the work vehicle and the unmanned aerial vehicles in a field shown on a display based on the position information.

### INDUSTRIAL APPLICABILITY

The unmanned aerial vehicles according to the present disclosure may be widely utilized not only for applications such as aerial photography, surveying, logistics, and agricultural spraying, but also for ground work related to agricultural work, and transportation of harvested crops and agricultural materials.

### REFERENCE SIGNS LIST

**2**... rotor (propeller), **3**... rotation drive device, **4**...main body, **4a**...control device, **4b**...sensors, **4c**...communication device, 5**.**..body frame, **10**...multicopter, **12**...rotor, 14...motor, **16.**..ESC, **22.**..rotor, **41**...GNSS receiver, **41**...GNSS receiver, **42**...IMU, **43**...altitude sensor, **44**...imaging device, **45**...LiDAR sensor, **52**...battery, **100**...work vehicle, **110**...communication device, **120**...control device, **130**...GNSS receiver, **140**...IMU, **150**...imaging device, **160**...LiDAR sensor, **170**...display, **180**...drive unit, **300**...server, **310**...communication device, **320**...processing device

## Claims

1. A display system configured to display, on a display, positions of a work vehicle and one or more unmanned aerial vehicles that are flying around the work vehicle, comprising
a processing device configured to obtain position information of the work vehicle and the unmanned aerial vehicles, and to display the positions of the work vehicle and the unmanned aerial vehicles in a field displayed on the display, based on the position information.

2. The display system according to Claim 1, wherein the processing device is configured to further obtain speed information of the work vehicle and the unmanned aerial vehicles, and based on the speed information, to display, in the field, movement directions of the work vehicle and the unmanned aerial vehicles together with the positions of the work vehicle and the unmanned aerial vehicles.

3. The display system according to Claim 2, wherein the processing device is configured to display the position and the movement direction of each of the unmanned aerial vehicles with the position of the work vehicle as a center in the field.

4. The display system according to Claim 2 or 3, wherein the processing device is configured to display icons of the work vehicle and each of the unmanned aerial vehicles, and arrows indicating the movement directions of the work vehicle and each of the unmanned aerial vehicles in the field.

5. The display system according to any one of Claims 2 to 4, wherein the processing device is configured to sequentially obtain the position information and the speed information of the work vehicle and each of the unmanned aerial vehicles, and sequentially update the display of the positions and the movement directions of the work vehicle and each of the unmanned aerial vehicles in the field.

6. The display system according to any one of Claims 1 to 5, wherein the processing device is configured to further obtain operation information indicating an operating state of each of the unmanned aerial vehicles, and based on the operation information, display the operating state of each of the unmanned aerial vehicles on the display together with the field.

7. The display system according to Claim 6, wherein the operating state includes at least one of: content of the work being performed by the unmanned aerial vehicle, whether the unmanned aerial vehicle is flying in autonomous mode, a remaining flight time of the unmanned aerial vehicle, or a remaining energy of the unmanned aerial vehicle.

8. The display system according to any one of Claims 1 to 7, wherein the processing device is configured to output an alert to the display when any unmanned aerial vehicle enters within a predetermined distance from the position of the work vehicle.

9. The display system according to any one of Claims 1 to 8, wherein the processing device is configured to obtain information of a map of an area where the work vehicle is located, generate a map image that overlays the positions of the work vehicle and the unmanned aerial vehicles on the map, and display the map image in the field.

10. The display system according to any one of Claims 1 to 9, further comprising the display.

11. A work vehicle comprising the display system according to any one of Claims 1 to 10.

12. A display method in a system including a work vehicle and one or more unmanned aerial vehicles flying around the work vehicle, the display method comprising:
obtaining position information of the work vehicle and the unmanned aerial vehicles; and
displaying positions of the work vehicle and the unmanned aerial vehicles in a field shown on a display based on the position information.
